# EUROPÄISCHE PATENTSCHRIFT

(11) **EP 3 284 149 B1**
(45) Veröffentlichungstag und Bekanntmachung des Hinweises auf die Patenterteilung: **14.10.2020**
(21) Anmeldenummer: 16726286.4
(22) Anmeldetag: 12.05.2016
(51) Int. Cl.: H02B 3/00

(54) **VERFAHREN UND ANORDNUNG FÜR EINEN BETRIEB EINER ELEKTRISCHEN ANLAGE UNTER BENÜTZUNG EINES THERMISCHEN MODELLS DESSEN**
METHOD AND ARRANGEMENT FOR OPERATING AN ELECTRICAL INSTALLATION USING A THERMAL MODEL THEREOF
PROCÉDÉ ET DISPOSITIF DESTINÉS AU FONCTIONNEMENT D'UNE INSTALLATION ÉLECTRIQUE AVEC UTILISATION D'UN MODÈLE THERMIQUE CORRESPONDANT

(30) Priorität: 05.06.2015 DE 102015210397
(43) Veröffentlichungstag der Anmeldung: 21.02.2018
(73) Patentinhaber: Siemens Aktiengesellschaft, 80333 München (DE)
(72) Erfinder: KUSCHEL, Mark, 13156 Berlin (DE)
(86) Internationale Anmeldenummer: PCT/EP2016/060650
(87) Internationale Veröffentlichungsnummer: WO 2016/192946

(56) Entgegenhaltungen:
- DE-A1-102010 046 141
- DE-A1-102011 002 870
- JP-A- 2009 254 104

## Beschreibung

Die Erfindung betrifft ein Verfahren gemäß Anspruch 1 sowie eine Anordnung gemäß Anspruch 10.

Gasisolierte Schaltanlagen (GIS) werden für einen vorgegebenen Nennstrom für eine ebenfalls vorher vorgegebene Spanne von Umgebungstemperaturen entwickelt. Die Tauglichkeit der GIS für diese Betriebsbedingungen, insbesondere eine Umgebungstemperaturspanne, wird im Rahmen von Typenprüfungen verifiziert.

Eine derartige GIS ist beispielsweise aus der Bedienungsanleitung "Metallgekapselte gasisolierte Schaltanlage 8DN8 für Bemessungs-Spannung bis 145 kV", Siemens AG 2014, Nr. 923 1050 100 H, bekannt. Eine Typenprüfung zu dieser GIS wurde von der Gesellschaft für elektrische Hochleistungsprüfungen im Report NO. 10105 Bs durchgeführt, wobei die Norm IEC 62271-1 verwendet wurde.

Die Norm "IEC 62271-1, Edition 1.1 2011-08, High-voltage switchgear and controlgear - Part 1: Common specifications" definiert, wie GIS betrieben werden müssen. Dabei wird beispielsweise auf den Seite 15 definiert, dass die Umgebungslufttemperatur 40 °C nicht überschreiten und die durchschnittliche Umgebungslufttemperatur über einen Zeitverlauf von 24 Stunden 35°C nicht überschreiten soll. Tabelle 3 auf Seite 38 beschreibt Temperaturobergrenzen, die von einzelnen Komponenten der GIS im Betrieb nicht überschritten werden dürfen.

Für die GIS 8DN8 ergab ein Test zum Temperaturanstieg über ca. 8 Stunden beispielsweise, dass die in der IEC 62271-1 in Tabelle 3 angegeben Temperaturgrenzen nicht verletzt wurden. Dabei wird der Nennstrom derart festgelegt, dass bei einer max. geltenden Umgebungstemperatur eine Temperaturobergrenze für die GIS nicht überschritten wird, so dass GIS-Komponenten thermisch nicht überlastet werden.

Eine so ausgelegte GIS kann zumindest zeitweise auch mit einem über dem Nennstrom liegenden Strom (Überstrom) betrieben werden, solange die zulässige Temperaturobergrenze (z.B. Leitertemperatur) nicht überschritten wird. Um durch zu hohe Temperatur verursachte Schäden des GIS zu vermeiden, erfordert eine solche Betriebsweise im Überstrombereich jedoch Erfahrungswerte des Herstellers (beim Betreiber i.d.R. unbekannt) oder eine Temperaturmessung an verschiedenen Stellen des Betriebsmittels. Insbesondere eine Messung der Temperatur des auf Hochspannungspotential befindlichen Leiters ist nur mit großem Aufwand realisierbar.

Ferner ist es aus dem Artikel "Real Time Thermal Rating (RTTR) - Ein Management- und Optimierungssystem der Energieübertragung in Hochspannungskabeln" von Mark Kuschel und Roberto Caspari, erschienen in Elektrizitätswirtschaft, Sonderdruck Nr. 4935, Jahrgang 1999 (2000), Heft 26, bekannt ein Temperaturmonitoring von Hochspannungskabeln zu betreiben und diese zeitweise im Überspannungsbereich zu betreiben. Es werden dazu im Verbund mit den Hochspannungskabeln Glasfaserkabel eingesetzt, mit denen mittels einer Messung von Laserlichtrückstreuung die Temperatur der Hochspannungskabel gemessen wird. Zusätzlich wird der Stromfluss über die Kabel erfasst. Es wird ein mathematisches Modell verwendet, dass unter Berücksichtigung von Kabeltemperatur und Stromfluss u.a. die maximal zulässigen Dauerlasten für den Überlastbetrieb mit einer vorgegebenen Überlast angibt, also z.B. eine für 5 Stunden Überlastbetrieb ohne Überhitzung über den Temperaturgrenzwert gerade noch zulässige Last.

Ein gattungsgemäßes Verfahren und eine gattungsgemäße Anordnung sind aus der Druckschrift DE 10 2011 002870 A1 bekannt. Ferner sind die Druckschriften DE 10 2010 046141 A1 und JP 2009 254104 A bekannt, die sich mit einer thermischen Überwachung von elektrischen Anlagen beschäftigen.

An die Erfindung stellt sich die Aufgabe, ein Verfahren anzugeben, mit dem die Leistungsübertragung und/oder Strombelastbarkeit von elektrischen Anlagen verbessert werden kann.

Die Erfindung löst diese Aufgabe durch ein Verfahren für einen Betrieb einer elektrischen Anlage mit einem Gehäuse und stromleitenden Komponenten, bei dem
- die Gehäusetemperatur und die durch die stromleitenden Komponenten fließende Stromstärke bestimmt werden und
- mittels eines thermischen Modells unter Berücksichtigung der Stromstärke und der Gehäusetemperatur die maximal zulässige Strombelastbarkeit berechnet wird, bei der keine thermische Überlastung der Anlage auftritt.

Dabei ist unter thermischer Überlastung der Anlage ein Zustand zu verstehen, in dem mindestens ein Teil der Anlage durch den Betrieb derart stark aufgeheizt wird, dass die Temperatur dieses Teils zulässige Höchstwerte überschreitet. Die zulässigen Höchstwerte können sich dabei aus der Materialbeschaffenheit des Teils der Anlage ergeben und/oder durch Typenprüfungen ermittelt worden sein - z.B. herstellerseitig bei der Entwicklung des Teils der Anlage. Als Folge einer thermischen Überlastung kann es zu versagen der Isolation der stromleitenden Komponenten oder anderen sicherheitsrelevanten Problemen kommen, so dass dieser Zustand im Betrieb unbedingt vermieden werden muss.

Ein Gehäuse im Sinne der Erfindung ist die äußere Abgrenzung der elektrischen Anlage, heutzutage typischerweise lackiertes Metall. Stromleitende Komponenten sind diejenigen Teile der elektrischen Anlage, die für Leitung von Strom vorgesehen sind, also z.B. bei einer GIS die mittels des Schutzgases isolierten leitenden Metallteile.

Die Gehäusetemperatur kann mittels im Stand der Technik üblicher Mittel zur Temperaturmessung erfasst werden; im einfachsten Fall durch ein nach dem Prinzip eines Thermometers arbeitenden Sensors.

Die durch die stromleitenden Komponenten fließende Stromstärke kann mittels geeigneter Messinstrumente wie z.B. einem Amperemeter ermittelt werden. Dabei kann die Stromstärke lokal in oder an der elektrischen Anlage gemessen werden oder es kann auf Messwerte zurückgegriffen werden, die beispielsweise an einer Zuleitung der elektrischen Anlage gewonnen werden. Die Stromstärke wird von einem Netzleitsystem einer Netzleitwarte bereit gestellt.

Das thermische Modell kann dabei beispielsweise ein mathematisches Modell sein, das auf einer Rechnereinrichtung als Software ausgebildet ist. Die Rechnereinrichtung kann lokal der Anlage zugeordnet sein oder zentral beispielsweise in einer Cloud oder bei einer Leitstelle vorgesehen werden. Wird die maximal zulässige Strombelastbarkeit der Anlage einer Leitstelle zur Verfügung gestellt, so kann diese Information direkt zur Steuerung des Energienetzes, dem die Anlage angehört, verwendet werden. So kann z.B. im Notbetrieb durch die Leistelle die Anlage mit einer vergleichsweise höheren Strombelastung als im Normalbetrieb eingesetzt werden.

Auch ein Einsatz des erfindungsgemäßen Verfahrens im Rahmen eines Online-Monitoring-Systems für Anlagen ist sinnvoll. Dabei kann die Temperaturüberwachung der Anlage für ein verbessertes Management von Wartung, Instandsetzung und/oder Ersetzung der Anlage verwendet werden.

In einer bevorzugten Ausführungsform des erfindungsgemäßen Verfahrens wird im Modell zusätzlich die Umgebungstemperatur berücksichtigt. Dies ist ein Vorteil, weil die Umgebungstemperatur Einfluss auf die Gehäusetemperatur hat und z.B. mitentscheidend dafür ist, bei welcher Gehäusetemperatur sich ein Gleichgewicht zwischen Wärmabstrahlung durch das Gehäuse und anderer Mechanismen, die Wärme von Gehäuse abführen, und Wärmezuführung aus dem Inneren der Anlage ausbildet.

In einer weiteren bevorzugten Ausführungsform des erfindungsgemäßen Verfahrens werden als elektrische Anlage eine Schaltanlage und/oder ein Leiter verwendet. Dies ist ein Vorteil, weil insbesondere Schaltanlagen mit ihrer hohen mechanischen und elektrischen Belastung über die Lebenszeit der Anlage auf Überlastung überwacht werden müssen.

In einer weiteren bevorzugten Ausführungsform des erfindungsgemäßen Verfahrens wird als die elektrische Anlage eine Übertragungsleitung verwendet. Dies ist ein Vorteil, weil Übertragungsleitungen z.B. im Hochspannungsbereich starken thermischen Belastungen ausgesetzt sind.

In einer weiteren bevorzugten Ausführungsform des erfindungsgemäßen Verfahrens ist die elektrische Anlage gasisoliert. Dies ist ein Vorteil, weil gasisolierte Anlagen insbesondere bei Anwendungen der Hochspannungstechnik aufgrund hoher Ströme einer starken Wärmeentwicklung ausgesetzt sind.

In einer weiteren bevorzugten Ausführungsform des erfindungsgemäßen Verfahrens berücksichtigt das Modell einen Wärmetransport innerhalb des Gehäuses von den stromleitenden Komponenten zum Gehäuse. Dabei beinhaltet der Begriff Wärmetransport im Sinne der vorliegenden Erfindung alle physikalischen Mechanismen, die Wärme transportieren. Insbesondere sind dies die Mechanismen Wärmeleitung sowie Konvektion und Wärmestrahlung, die insbesondere im Zusammenhang mit Schutzgasen durch den Fachmann berücksichtigt werden sollten. Es sind dabei in der Technik entsprechende Gleichungen zur Berechnung von Wärmetransportvorgängen mit unterschiedlichsten Gasen und Festkörpern bekannt, auf die im Rahmen der Erfindung zurückgegriffen werden kann. Weiterhin kann in bekannten Gleichungen für Wärmetransportvorgänge auch die Geometrie eines Gegenstandes berücksichtigt werden, was für die Anwendung bei elektrischen Anlagen bzw. deren Komponenten besonders genaue Ergebnisse liefert. Dabei kann zur Verbesserung der Genauigkeit des Modells auch berücksichtigt werden, dass von Inneren des Gehäuses zur Außenwand des Gehäuses ebenfalls ein Wärmetransport stattfindet.

Dies ist ein Vorteil, weil auf diese Weise besonders genau von der Oberflächentemperatur am Gehäuse auf die Temperatur der stromführenden Komponenten zurückgeschlossen werden kann.

Die Wärmetransportfähigkeit einzelner Komponenten kann beispielsweise im Vorfeld durch Herstellerangaben oder Schätzungen aufgrund der Materialbeschaffenheit eines Bauteils bestimmt werden. Auch ist es möglich, die Wärmetransportfähigkeit des Bauteils mittels eigens für diesen Zweck durchgeführter Messungen zu bestimmen. Insbesondere muss bei gasisolierten elektrischen Anlagen auch der Wärmetransport durch das verwendete Schutzgas berücksichtigt werden. Das Schutzgas wird in diesem Fall wie eine Komponente der Anlage behandelt und in das Modell einbezogen.

Dabei ist es zweckmäßig, die Wärmetransportfähigkeit der relevanten Komponenten eines Anlagentyps in einer Datenbank zusammenzufassen und diese im erfindungsgemäßen Verfahren zur Errechnung der Wärmetransportfähigkeit heranzuziehen. Die Datenbank kann lokal in einer Rechnerkomponente oder zentral in einer Cloud oder auch einer Leitstelle bereit gestellt werden. Diese Möglichkeit ist insbesondere interessant, wenn individuell geplante Anlagen überwacht werden sollen, denn es kann mittels der Datenbank eine individuelle Wärmetransportfähigkeit für diese Anlage berechnet werden, um möglichst genaue Temperaturwerte für die leitenden Komponenten zu berechnen.

In Ergänzung oder alternativ zu diesem Vorgehen kann auch eine Eichmessung mit einer kompletten Anlage durchgeführt werden, die für die Eichmessung mit mindestens einem Temperatursensor an den leitenden Komponenten und mindestens einem Temperatursensor an dem Gehäuse ausgestattet ist. Wird nun unterschiedliche starker Strom durch die leitenden Komponenten geleitet, so kann anhand des zeitlichen Verlaufs einer Erwärmung von leitenden Komponenten und Gehäuse auf die Wärmetransportfähigkeit geschlossen werden. Es können entsprechend auch Eichkurven, beispielsweise in Abhängigkeit von Umgebungstemperatur und/oder Stromstärke erstellt und direkt in dem Modell gemäß dem erfindungsgemäßen Verfahren verwendet werden.

Beim erfindungsgemäßen Verfahrens wird anhand der maximal zulässigen Strombelastbarkeit die Anlage mit einer höheren Leistung als der Nennleistung der Anlage betrieben. Dies ist ein Vorteil, weil dadurch z.B. im Notbetrieb die Anlage zeitweise oder sogar dauerhaft im Überlastbereich betrieben werden kann, ohne die Gefahr einer Überhitzung zu riskieren.

In einer weiteren bevorzugten Ausführungsform des erfindungsgemäßen Verfahrens wird mittels des Modells eine Vorhersage der Temperaturentwicklung innerhalb der Anlage bei Überlastbetrieb bereit gestellt. Mittels dieser Vorhersage kann in vorteilhafter Weise beispielsweise durch einen Anlagenbediener oder durch eine Leitstelle genau festgelegt werden, wie lange eine Anlage ohne Gefährdung noch im Überlastbereich betrieben werden darf.

In einer weiteren bevorzugten Ausführungsform des erfindungsgemäßen Verfahrens wird mittels des Modells der Abnutzungszustand der Anlage erkannt. Dies ist ein Vorteil, weil durch die Berechnung der Temperatur der leitenden Komponenten innerhalb der Anlage auf deren thermische Belastung geschlossen werden kann. Bei hoher thermischer Belastung über einen längeren Zeitraum kann sich die Lebensdauer der Anlage durch Materialverschleiß verringern, so dass kürzere Wartungstermine eingeplant werden müssen als bei Normalbetrieb ohne hohe thermische Belastung. Der Abnutzungszustand einer Anlage ist dabei im Sinne eines Abnutzungsgrades oder einer Alterungsangabe zu verstehen.

In einer weiteren bevorzugten Ausführungsform des erfindungsgemäßen Verfahrens wird anhand des Abnutzungszustands der Anlage eine zustandsbasierte Wartung geplant. Dies ist ein Vorteil, weil insbesondere mittels durch Analyse des zeitlichen Verlaufs einer Erwärmung der Anlage auf deren Abnutzung geschlossen werden kann.

In einer weiteren bevorzugten Ausführungsform des erfindungsgemäßen Verfahrens werden kontinuierlich Stromstärke und Gehäusetemperatur erfasst und die maximal zulässige Strombelastbarkeit berechnet. Dies ist ein Vorteil, weil die Anlage auf diese Weise nahezu in Echtzeit überwacht werden kann. Alternativ dazu kann an vorgegebenen Zeitpunkten, beispielsweise periodisch, also z.B. jede Minute, das Verfahren ausgeführt werden.

In einer weiteren bevorzugten Ausführungsform des erfindungsgemäßen Verfahrens werden erfasste Werte für Stromstärke und Gehäusetemperatur sowie die mittels des Modells berechneten maximal zulässige Strombelastbarkeit jeweils gespeichert. Dies ist ein Vorteil, weil diese gespeicherten Daten z.B. als Erfahrungsdaten für die Auslegung anderer Anlagen gleichen Typs zu dienen können. Dies kann beispielsweise mittels einer Datenbank erfolgen und hat den Vorteil, dass wertvolle Nutzungsdaten der Anlage erzeugt werden, die der Datenanalyse zur Verbesserung künftiger Anlagen sowie zur Entwicklung neuer datengetriebener Anwendungen für den Kunden eingesetzt werden können.

Ferner stellt sich an die Erfindung die Aufgabe, eine Anordnung anzugeben, mit der die Leistungsübertragung und/oder Strombelastbarkeit von elektrischen Anlagen verbessert werden kann.

Die Erfindung löst diese Aufgabe durch eine Anordnung gemäß Anspruch 10. Bevorzugte Ausführungsformen ergeben sich aus den abhängigen Ansprüchen 11 bis 13. Dabei ergeben sich jeweils für die erfindungsgemäße Anordnung und ihre Ausführungsformen sinngemäß die gleichen Vorteile wie eingangs für das erfindungsgemäße Verfahren erläutert.

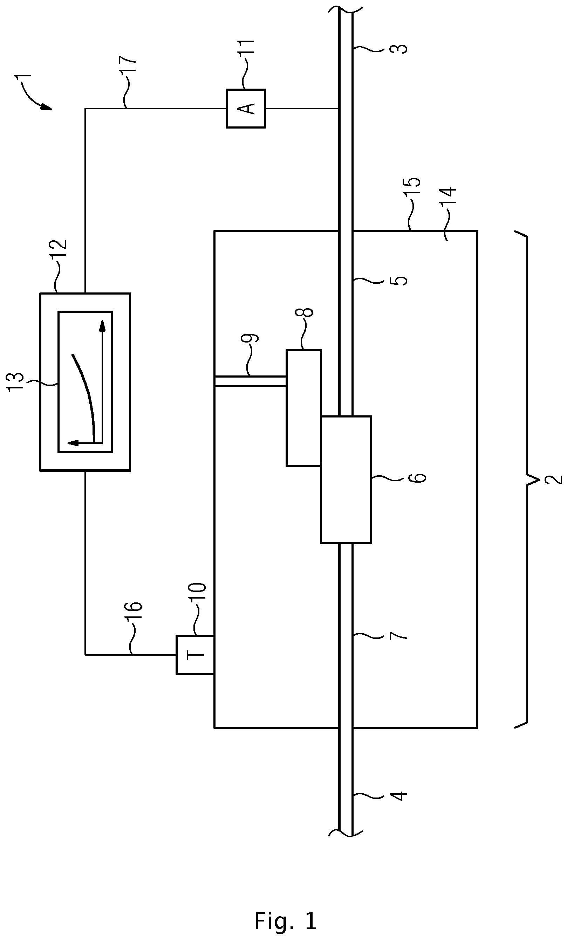

Zur weiteren Erläuterung zeigt die Figur ein Ausführungsbeispiel einer erfindungsgemäßen Anordnung 1.

Die Anordnung 1 weist eine elektrische Anlage 2 auf, die als gasisolierte Hochspannungsschaltanlage ausgebildet ist. Die elektrische Anlage 2 ist über Anschlussleitungen 3,4 mit einem nicht näher dargestellten Energienetz verbunden. Dabei weist die Anlage 2 ein Gehäuse 15 auf, das mittels eines Schutzgases 14 elektrisch vom Gehäuse 15 isolierte leitende Komponenten 5,6,7 aufweist. In der stark schematischen Darstellung der Figur ist die Komponente 6 beispielsweise eine Schaltanordnung 6 und die Komponente 8 die zugehörige Mechanik 8, die mittels einer Aufhängung 9 innerhalb des Gehäuses 15 befestigt ist.

Am Gehäuse 15 ist ein Temperatursensor 10 angeordnet, der die Gehäusetemperatur misst und an eine Rechnereinrichtung 12 übermittelt. An den Anschlussleitungen 3,4 ist eine Strommesseinrichtung 11 zur Ermittlung der durch die stromleitenden Komponenten 5,6,7 fließenden Stromstärke angeordnet, die die gemessene Stromstärke an die Rechnereinrichtung 12 übermittelt. Dabei kann die Strommesseinrichtung auch an anderer Stelle im Energienetz angeordnet sein. Erfindungsgemäß ist der Strommesswert von einer Leitstelle für das Energienetz bereit gestellt.

Die Übermittlung von Temperatur und Strommesswert erfolgt jeweils über eine Datenkommunikationsverbindung 16,17, die kabelgebunden oder kabellos z.B. per Funk ausgeführt werden kann.

Des Weiteren wird über einen weiteren Temperatursensor (nicht gezeigt) die Umgebungstemperatur erfasst und an die Rechnereinrichtung 12 übermittelt. Der weitere Temperatursensor kann dabei in den Temperatursensor 10 integriert sein.

Die Rechnereinrichtung 12 weist übliche Mittel zur Datenverarbeitung und Speicherung auf, so dass ein Modell 13 innerhalb der Rechnereinrichtung 12 verwendet werden kann, um unter Berücksichtigung der Stromstärke, der Gehäusetemperatur und der Umgebungstemperatur die maximal zulässige Strombelastbarkeit ohne thermische Überlastung der Anlage 2 zu berechnen. Dabei kann die Rechnereinrichtung 12 als Einzelgerät ausgebildet sein oder in eine vorhandene Rechnereinrichtung wie z.B. ein Schutzgerät für die elektrische Anlage integriert sein.

## Patentansprüche

1. Verfahren für einen Betrieb einer elektrischen Anlage mit einem Gehäuse und stromleitenden Komponenten, bei dem
- die Gehäusetemperatur und die durch die stromleitenden Komponenten fließende Stromstärke bestimmt werden und
- mittels eines thermischen Modells unter Berücksichtigung der Stromstärke und der Gehäusetemperatur die maximal zulässige Strombelastbarkeit berechnet wird, bei der keine thermische Überlastung der Anlage auftritt,
**dadurch gekennzeichnet, dass**
die Stromstärke von einem Netzleitsystem einer Netzleitwarte bereit gestellt wird, und dass
anhand der maximal zulässigen Strombelastbarkeit die Anlage mit einer höheren Leistung als der Nennleistung der Anlage betrieben wird.

2. Verfahren nach Anspruch 2,
**dadurch gekennzeichnet, dass**
als elektrische Anlage eine Schaltanlage und/oder eine Leitung verwendet werden.

3. Verfahren nach Anspruch 1 oder 2,
**dadurch gekennzeichnet, dass**
die elektrische Anlage gasisoliert ist.

4. Verfahren nach einem der vorhergehenden Ansprüche,
**dadurch gekennzeichnet, dass**
das Modell einen Wärmetransport innerhalb des Gehäuses von den stromleitenden Komponenten zum Gehäuse berücksichtigt.

5. Verfahren nach Anspruch 4,
**dadurch gekennzeichnet, dass**
mittels des Modells eine Vorhersage der Temperaturentwicklung innerhalb der Anlage bei Überlastbetrieb bereit gestellt wird.

6. Verfahren nach einem der vorhergehenden Ansprüche,
**dadurch gekennzeichnet, dass**
mittels des Modells der Abnutzungszustand der Anlage erkannt wird.

7. Verfahren nach Anspruch 6,
**dadurch gekennzeichnet, dass**
anhand des Abnutzungszustands der Anlage eine zustandsbasierte Wartung geplant wird.

8. Verfahren nach einem der vorhergehenden Ansprüche,
**dadurch gekennzeichnet, dass**
kontinuierlich Stromstärke und Gehäusetemperatur erfasst werden und die maximal zulässige Strombelastbarkeit berechnet wird.

9. Verfahren nach einem der vorhergehenden Ansprüche,
**dadurch gekennzeichnet, dass**
erfasste Werte für Stromstärke und Gehäusetemperatur sowie die mittels des Modells berechnete maximal zulässige Strombelastbarkeit jeweils gespeichert werden.

10. Anordnung (1) für einen Betrieb einer elektrischen Anlage (2) mit einem Gehäuse (15) und stromleitenden Komponenten (5,6,7), aufweisend
- einen Gehäusetemperatursensor (10) und
- eine Strommesseinrichtung (11) zur Ermittlung der durch die stromleitenden Komponenten (5,6,7) fließenden Stromstärke und
- eine Rechnereinrichtung (12), die konfiguriert ist, mittels eines thermischen Modells (13) unter Berücksichtigung der Stromstärke und der Gehäusetemperatur die maximal zulässige Strombelastbarkeit zu berechnen, bei der keine thermische Überlastung der Anlage (2) auftritt,
**dadurch gekennzeichnet, dass**
ein Netzleitsystem einer Netzleitwarte ausgebildet ist, die Stromstärke bereit zu stellen, und dass
- die Anlage (2) ausgebildet ist, anhand der maximal zulässigen Strombelastbarkeit mit einer höheren Leistung als der Nennleistung der Anlage (2) betreibbar zu sein.

11. Anordnung (1) nach Anspruch 10,
**dadurch gekennzeichnet, dass**
die Rechnereinrichtung (12) konfiguriert ist, bei dem Modell die Wärmetransportfähigkeit innerhalb des Gehäuses (15) von den stromleitenden Komponenten (5,6,7) zum Gehäuse (15) zu berücksichtigen.

12. Anordnung (1) nach einem der Ansprüche 10 oder 12, **dadurch gekennzeichnet, dass** die Rechnereinrichtung (12) konfiguriert ist, mittels des Modells (13) eine Vorhersage der Temperaturentwicklung innerhalb der Anlage bei Überlastbetrieb bereit zu stellen.

13. Anordnung (1) nach einem der Ansprüche 10 bis 12, **dadurch gekennzeichnet, dass** die Rechnereinrichtung (12) konfiguriert ist, mittels des Modells (13) den Zustand der Anlage zu erkennen.

## Claims

1. Method for operating an electrical installation having a housing and current-conducting components, in which
- the housing temperature and the current intensity flowing through the current-conducting components are determined, and
- the maximum permissible current-carrying capacity at which no thermal overloading of the installation occurs is calculated by means of a thermal model taking into account the current intensity and the housing temperature,
**characterized in that**
the current intensity is provided by a network control system of a network control room, and **in that**
on the basis of the maximum permissible current-carrying capacity, the installation is operated with a higher power than the nominal power of the installation.

2. Method according to Claim 2,
**characterized in that**
a switchgear and/or a line is/are used as the electrical installation.

3. Method according to Claim 1 or 2,
**characterized in that**
the electrical installation is gas-insulated.

4. Method according to one of the preceding claims, **characterized in that**
the model takes into account heat transfer inside the housing from the current-conducting components to the housing.

5. Method according to Claim 4,
**characterized in that**
a prediction of the temperature development inside the installation during overload operation is provided by means of the model.

6. Method according to one of the preceding claims,
**characterized in that**
the wear condition of the installation is detected using the model.

7. Method according to Claim 6,
**characterized in that**
condition-based maintenance is planned on the basis of the wear condition of the installation.

8. Method according to one of the preceding claims,
**characterized in that**
the current intensity and housing temperature are recorded continuously and the maximum permissible current-carrying capacity is calculated.

9. Method according to one of the preceding claims,
**characterized in that**
recorded values for the current intensity and the housing temperature and the maximum permissible current-carrying capacity calculated using the model are each stored.

10. Arrangement (1) for operating an electrical installation (2) having a housing (15) and current-conducting components (5, 6, 7), having
- a housing temperature sensor (10) and
- a current measuring device (11) for determining the current intensity flowing through the current-conducting components (5, 6, 7), and
- a computer device (12) which is configured to calculate the maximum permissible current-carrying capacity at which no thermal overloading of the installation (2) occurs by means of a thermal model (13) taking into account the current intensity and the housing temperature,
**characterized in that**
a network control system of a network control room is designed to provide the current intensity, and **in that**
- the installation (2) is designed to be able to be operated with a higher power than the nominal power of the installation (2) on the basis of the maximum permissible current-carrying capacity.

11. Arrangement (1) according to Claim 10,
**characterized in that**
the computer device (12) is configured to take into account the heat transfer capability inside the housing (15) from the current-conducting components (5, 6, 7) to the housing (15) in the model.

12. Arrangement (1) according to either of Claims 10 and 12,
**characterized in that**
the computer device (12) is configured to provide a prediction of the temperature development inside the installation during overload operation by means of the model (13).

13. Arrangement (1) according to one of Claims 10 to 12,
**characterized in that**
the computer device (12) is configured to detect the condition of the installation by means of the model (13).

## Revendications

1. Procédé pour faire fonctionner une installation électrique ayant un boîtier et des composants conduisant le courant, dans lequel
- on détermine la température du boîtier et les intensités du courant passant dans les composants conduisant le courant et
- au moyen d'un modèle thermique et en tenant compte des intensités du courant et de la température du boîtier, on calcule l'intensité de courant maximum admissible, pour laquelle il ne se produit pas de surcharge thermique de l'installation,
**caractérisé en ce que**
on règle les intensités du courant par un système de gestion de réseau d'une salle de contrôle de réseau, et **en ce que** à l'aide de l'intensité de courant maximum admissible, on fait fonctionner l'installation à une puissance plus grande que la puissance nominale de l'installation.

2. Procédé suivant la revendication 1,
**caractérisé en ce que**
l'on utilise comme installation électrique une installation de coupure et/ou une ligne.

3. Procédé suivant la revendication 1 ou 2,
**caractérisé en ce que**
l'installation électrique est isolée par du gaz.

4. Procédé suivant l'une des revendications précédentes,
**caractérisé en ce que**
le modèle prend en compte un transport de chaleur dans le boîtier des composants conduisant le courant au boîtier.

5. Procédé suivant la revendication 4,
**caractérisé en ce qu'**
au moyen du modèle, on établit déjà une prédiction du déroulement de la température dans l'installation en fonctionnement en surcharge.

6. Procédé suivant l'une des revendications précédentes,
**caractérisé en ce qu'**
au moyen du modèle, on détecte l'état d'usure de l'installation.

7. Procédé suivant la revendication 6,
**caractérisé en ce que**,
à l'aide de l'état d'usure de l'installation, on planifie un entretien en fonction de l'état.

8. Procédé suivant l'une des revendications précédentes,
**caractérisé en ce que**
l'on détecte en continu des intensités de courant et une température du boîtier et on calcule l'intensité maximum de courant admissible.

9. Procédé suivant l'une des revendications précédentes,
**caractérisé en ce que**
l'on met en mémoire des valeurs relevées des intensités de courant et de la température du boîtier, ainsi que l'intensité maximum admissible calculée au moyen du modèle.

10. Système (1) pour faire fonctionner une installation (2) électrique ayant un boîtier (5) et des composants (5, 6, 7) conduisant le courant, comportant
- une sonde (10) de la température du boîtier et
- un dispositif (11) de mesure du courant pour la détermination des intensités du courant passant dans les composants (5, 6, 7) conduisant le courant et
- un dispositif (12) informatique, configuré pour calculer, au moyen d'un modèle (13) thermique et en tenant compte des intensités du courant et de la température du boîtier, l'intensité de courant maximum admissible pour laquelle une surcharge thermique de l'installation (2) ne se produit pas,
**caractérisé en ce qu'**
un système de gestion du réseau d'un poste de gestion du réseau est constitué pour mettre à disposition des intensités du courant, et **en ce que**
- l'installation (2) est constituée pour pouvoir fonctionner à l'aide de l'intensité de courant maximum admissible à une puissance plus grande que la puissance nominale de l'installation (2).

11. Système (1) suivant la revendication 10,
**caractérisé en ce que**
le dispositif (12) informatique est configuré pour tenir compte dans le modèle de l'aptitude à transporter de la chaleur dans le boîtier (15) des composants (5, 6, 7) conduisant le courant au boîtier (15).

12. Système (1) suivant l'une des revendications 10 ou 12,
**caractérisé en ce que**
le dispositif (12) informatique est configuré pour donner, déjà au moyen du modèle (13), une prédiction du déroulement de la température dans l'installation en fonctionnement en surcharge.

13. Système (1) suivant l'une des revendications 10 à 12,
**caractérisé en ce que**
le dispositif (12) informatique est configuré pour détecter, au moyen du modèle (13), l'état de l'installation.
